# EUROPÄISCHE PATENTSCHRIFT

(11) **EP 1 256 616 B1**
(45) Veröffentlichungstag und Bekanntmachung des Hinweises auf die Patenterteilung: **14.01.2009**
(21) Anmeldenummer: 02100464.3
(22) Anmeldetag: 08.05.2002
(51) Int. Cl.: C09K 11/80, H01J 17/49, C09K 11/64

(54) **Plasmabildschirm mit blauem Leuchtstoff**
Plasma display panel with blue phosphor
Panneau de visualisation à plasma avec luminophore bleu

(30) Priorität: 12.05.2001 DE 10123236
(43) Veröffentlichungstag der Anmeldung: 13.11.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Feldmann, Claus, Dr., 52066 Aachen (DE); Jüstel, Thomas, Dr., 52066 Aachen (DE); Ronda, Cornelis, Dr., 52066 Aachen (DE); Mayr, Walter, 52066 Aachen (DE)
(74) Vertreter: Volmer, Georg

(56) Entgegenhaltungen:
- GB-A- 2 142 775
- US-A- 4 216 408
- US-A- 6 045 721
- SHIGETA T ET AL: "ANALYTICAL RESEARCH OF DECREASE IN LUMINANCE FOLLOWING ANNEAL OF BAMGAL10O17:EU2+ BLUE PHOSPHOR FOR FLUORESCENT LAMPS AND PLASMA DISPLAY PANELS" NATIONAL TECHNICAL REPORT, JP, Bd. 43, Nr. 2, April 1997 (1997-04), Seiten 181-187, XP008047055 ISSN: 0028-0291

## Beschreibung

Die Erfindung betrifft einen Plasmabildschirm ausgerüstet mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einem oder mehreren Elektroden-Arrays zur Erzeugung von stillen elektrischen Entladungen in den Plasmazellen und mit einer Leuchtstoffschicht, die einen blauemittierenden Leuchtstoff aus der Gruppe der dotierten europiumaktivierten Bariummagnesiumaluminate enthält.

Das Grundprinzip eines Plasmabildschirms besteht darin, dass eine Hochspannung in einem Gas mit niedrigem Gasdruck eine elektromagnetische Strahlung erzeugt, die selbst sichtbar sein kann oder durch Leuchtstoffe in sichtbares Licht umgewandelt wird.

In einem Farbplasmabildschirm üblicher Bauart besteht die Gasfüllung aus einem Edelgas, z. B. Xenon oder einem Edelgasgemisch z. B. ein Gemisch aus Helium, Neon und Xenon. Bei der Entladung entsteht Ultraviolett - Strahlung im VUV-Bereich, d.h. mit einer Wellenlänge kleiner 200 nm. Diese VUV-Strahlung regt die rot-, grün- und blauemittierenden Leuchtstoffe (RGB-Leuchtstoffe) in der Leuchtstoffschicht zur Abstrahlung von sichtbarem Licht in Rot, Grün und Blau an. Die lumineszierenden Materialien in Plasmabildschirmen nutzen also anders als konventionelle Leuchtstofflampen die hochenergetische Seite des UV-Spektrums. Je nach der Zusammensetzung des Edelgasgemisches und des Gasdruckes kann die VUV-Emission zwischen einer Einzellinie bei 147 nm oder einer breiten Bande in der Gegsnd von 172 nm variieren. Daraus resultieren neue Anforderungen an die RGB-Leuchtstoffe in einem Plasmabildschirm.

Die RGB-Leuchtstoffe sind das Endglied der Energietransferkette, in der in dem Plasmabildschirm elektrische Energie in sichtbares Licht umgewandelt wird. Die Effizienz eines Plasmabildschirms mit einer Leuchtstoffschicht hängt entscheidend von elektrooptischen Wirkungsgrades der Leuchtstoffe ab, d.h. wie vollständig das erzeugte UV-Licht im Leuchtstoff absorbiert wird und wie vollständig anschließend das erzeugte sichtbare Licht den Plasmabildschirm in Richtung des Betrachters verlässt.

Unter den blauemittierenden Leuchtstoffen ist Europium(II)-aktiviertes Bariummagnesiumaluminat bezüglich seiner Farbeigenschaften und seines elektro-optischen Wirkungsgrades unübertroffen. Problematisch ist allerdings seine relativ starke Degradation unter dem Einfluss von VUV-Strahlung. Die Degradation ist besonders stark unter dem Einfluss von VUV-Strahlung mit einer Wellenlänge kleiner 200 nm und äußert sich in einer Verschlechterung des elektrooptischen Wirkungsgrades und in einer Verschiebung des Farbpunktes in den grünen Bereich.

Nach SHIGETA T et al: "Analytical Research of Decrease in Luminance Following Anneal of BaMgAl10O17: Eu2+ blue phosphor for Fluorescent Lamps and Plasma Display Panels" National Technical Report, JP, Bd. 43, Nr. 2, April 1997 (1997-04), Seite 181-187, XP008047055 ISSN: 0028-0291 wird die Degradation des konventionellen Bariummagnesiumaluminat-Leuchtstoffes mit der allgemeinen Formel BaMgAl₁₀O₁₇:Eu²⁺ vermindert, wenn man ihn mit hoher Reinheit und Kristallinität herstellt.

Aus US 6,045,721 ist ein Leuchtstoff mit der allgemeinen Formel Ba₁₋ₑEuₑMnₘMg_{1+δ-m}Al_{10+2f}O_{17+δ+3f} bekannt, bei dem die Verschiebung des Farbpunktes über die Lebensdauer eines Bildschirms gering ist.

Die Degradation und Farbverschiebung des Europium(II)-aktivierten Bariummagnesiumaluminat beginnt jedoch bereits bei der Herstellung des Plasmabildschirms, bei der die Leuchtstoffschicht Temperaturen von 500°C und mehr ausgesetzt ist.

Es ist eine Aufgabe der vorliegenden Erfindung einen Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht, die einen blauemittierenden Leuchtstoff aus der Gruppe der dotierten europiumaktivierten Bariummagnesiumaluminate enthält, zur Verfügung zu stellen, der sich durch eine verbesserte, naturgetreue Farbwieder gabe und größere Helligkeit auszeichnet.

Erfindungsgemäß wird die Aufgabe gelöst durch einen Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladun gen in den Plasmazellen und mit einer Leuchtstoffschicht, die einen Leuchtstoff, ausgewählt aus der Gruppe der dotierten Europium(II)aktivierten Bariummagnesiumaluminaten mit der allgemeinen Formel
Ba₁₋ₓMₓMgAl₁₀O_{17-0.5x} :Eu mit 0 < x = 0.5 und M = Li, Na, K, Rb und Cs;
BaMg_{1-y}M_{y}Al₁₀O_{17-0.5y}:Eu mit 0 < y = 0.5 und M = Li, Na, K, Rb und Cs;
und
BaMgAl_{10-z}N_{z}O_{17-0.5z}:Eu mit 0 < z = 5.0 und N = Mg, Ca, Sr, Ba und Zn
enthält.

Bei einem derartigen Plasmabildschirm ist der Blaupunkt zu höherer Falbsättigung verschoben. Dies beeinflusst nicht nur die Blautöne, sondern auch alle Zwischentöne auf den Linien Blau-Grün und Blau-Rot, die durch die Vergrößerung des Darstellungsdreiecks im blauen Bereich erreichbar werden. Dadurch können viele Farbtöne naturgetreuer dargestellt werden, ein Unterschied, der sichtbar ist. Außerdem ist der Farbkontrast bei heller Umgebungsbeleuchtung erhöht.

Im Rahmen der vorliegenden Erfindung ist es bevorzugt, dass der blauemittierende Leuchtstoff 1 bis 30 Mol% Europium(II) enthält.

Die Erfindung betrifft auch einen Leuchtstoff, ausgewählt aus der Gruppe der dotierten Europium(II)aktivierten Bariummagnesiumaluminaten mit der allgemeinen Formel
Ba₁₋ₓMₓMgAl₁₀O_{17-0.5x} :Eu mit 0 < x = 0.5 und M = Li, Na, K, Rb und Cs;
BaMg_{1-y}M_{y}Al₁₀O_{17-0.5y}:Eu mit 0 < y = 0.5 und M = Li, Na, K, Rb und Cs;
und
BaMgAl_{10-z}N_{z}O_{17-0.5z}:Eu mit 0 < z = 5.0 und N = Mg, Ca, Sr, Ba und Zn.

Dieser Leuchtstoff zeichnet sich durch eine verbesserte thermische Belastbarkeit, insbesondere in sauerstoffhaltiger Atmosphäre aus, weil die Oxidation des Eu(II) zu Eu(III) vermindert wird. Deshalb leidet die Luminanz dieses Leuchtstoffes nicht bei der Herstellung des Plasmabildschirms und die Effizienz bleibt auch unter Anregung durch VUV-Strahlung sehr lange konstant.

Nachfolgend wird die Erfindung anhand von einer Figur und zwei Ausführungsbeispielen weiter erläutert.

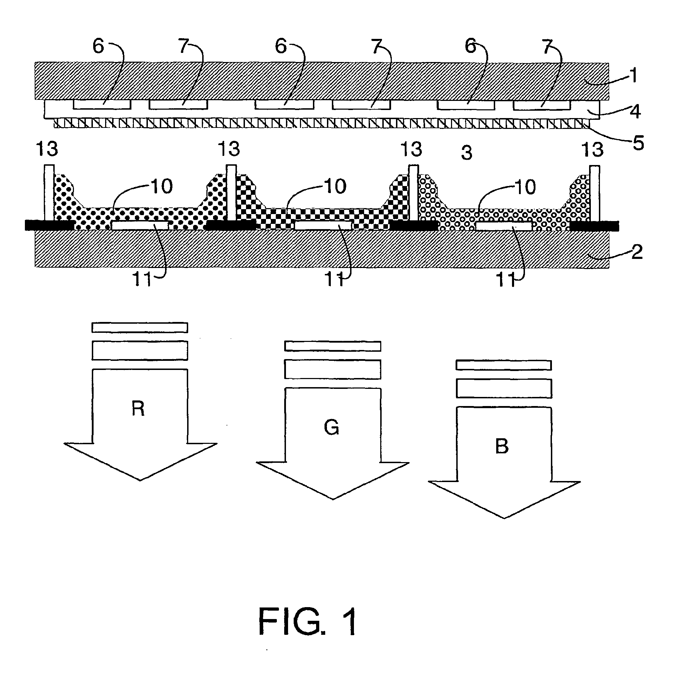

Fig. 1 zeigt schematisch einen Querschnitt durch einen Plasmabildschirm.

Die Lichtanregung durch die UV-Strahlung einer Gasentladung ist das zugrundeliegende Prinzip aller Typen von Plasmadisplays. Plasmadisplays können in D.C.- adressierte Bildschirme und in A.C.- adressierte Bildschirme eingeteilt werden. Unterscheiden tun sie sich in der Art der Strombegrenzung.

Fig. 1 zeigt beispielhaft eine Plasmazelle eines AC- Plasmadisplays. Ein solcher AC-Plasmabildschirm setzt sich aus einer transparenten Frontplatte 1 und einer Trägerplatte 2 zusammen, die auf Abstand voneinander gähalten werden und peripher hermetisch verschlossen sind Der Raum zwischen beiden Platten bildet den Entladungsraum 3, der durch die Schutzschicht und die Leuchtstoffschicht begrenzt wird. Üblicherweise bestehen sowohl Frontplatte als auch Trägerplatte aus Glas. Individuell ansteuerbare Plasmazellen werden durch eine Rippenstruktur 13 mit Trennrippen gebildet. Eine Vielzahl von transparenten Bildelektroden 6, 7 sind streifenförmig auf der Frontplatte angeordnet. Die zugehörigen Steuerelektroden 11 sind auf der Trägerplatte senkrecht dazu angebracht, so dass an den Kreuzungspunkten jeweils ein Entladung gezündet werden kann.

Der Entladungsraum ist mit einem passenden Entladungsgas gefüllt, z. B. mit Xenon, einem xenonhaltigen Gas, Neon oder einem neonhaltigem Gas. Die Gasentladung wird zwischen den Bildelektroden 6, 7 auf der Frontplatte gezündet. Um einen direkten Kontakt zwischen dem Plasma und den Bildelektroden 6, 7 zu vermeiden, sind diese mit einer dielektrischen Schicht 4 und einer Schutzschicht 5 bedeckt. In der Entladungszone ist das Gas ionisiert und es entsteht ein Plasma, das VUV-Strahlung emittiert.

Je nach Zusammensetzung des Gases in der Plasmazelle ändert sich die spektrale Intensität der Gasentladung Gasgsmische, die weniger als 30 Vol.-% Xenon enthalten, emittieren hauptsächlich Resonanzstrahlung bei 147 nm, Gasgemische mit mehr als 30 Vol.-% Xenon emittieren die Excimerstrahlung bei 172 nm.

Die ausgesendete VUV-Strahlung regt bildpunktweise strukturierte rote grüne und blaue Leuchtstoffe zur Emission von Licht im sichtbaren Bereich an, wodurch ein Farbeindruck entsteht. Die Bildpunkte des Plasmabildschirms in den drei Grundfarben Rot, Blau und Grün werden durch eine Leuchtstoffschicht 10 auf mindestens einem Teil der Trägerplatte und/oder auf den Wänden der Trennrippen in den Plasmazellen realisiert. Die Plasmazellen sind aufeinanderfolgend je mit einem roten, grünen oder blauen Leuchtstoff beschichtet. Drei nebeneinander liegende Plasmazellen repräsentieren ein Pixel, mit dem die Darstellung aller Farben durch Mischen der drei Grundfarben möglich ist.

Die Leuchtstoffe zur Erzeugung der blauen Farbe mit der allgemeinen Formel
Ba₁₋ₓMₓMgAl₁₀O_{17-0.5x} :Eu mit 0 < x = 0.5 und M = Li, Na, K, Rb und Cs;
BaMg_{1-y}M_{y}Al₁₀O_{17-0.5y}:Eu mit 0 < y = 0.5 und M = Li, Na, K, Rb und Cs;
und
BaMgAl_{10-z}N_{z}O_{17-0.5z}:Eu mit 0 < z = 5.0 und N = Mg, Ca, Sr, Ba und Zn
bestehen ebenso wie der konventionelle Leuchtstoff BaMgAl₁₀O₁₇ :Eu aus einem Wirtsgitter das mit dem Aktivatorion Eu²⁺ in einer Konzentration zwischen 1 und 30 Mol%, bevorzugt 5 Mol% dotiert ist.

Die Kationen des konventionellen Leuchtstoffs sind durch ein Kation mit einer niedrigeren Valenz teilweise substituiert. Die zweiwertigen Kationen Barium(II) und Magnesium(II) können teilweise durch die Alkalimetallkationen Lithium, Natrium, Kalium, Rubidium und Cäsium substituiert werden, die im Wirtsgitter die gleichen Gitterplätze einnehmen.
Das dreiwertige Kation Aluminium kann teilweise durch die zweiwertigen Kationen der Elemente Magnesium, Caldum, Strontium, Barium und Zink, die ebenfalls im Wirtsgitter die Plätze des Aluminiums einnehmen. Eine derartige Substitution wird auch als p-Substitution bezeichnet.

Die dotierten Europium(II)aktivierten Bariummagnesiumaluminate nach konventionellen Methoden hergestellt, z. B. durch eine Festkörperreaktion. Dabei werden die Oxide oder Carbonate als Ausgangsverbindung verwendet. Diese werden gemischt, gemahlen und anschließend gesintert. Man erhält Leuchtstoffe mit einer einheitlichen Kristallstruktur als feinkörnige Partikel mit einer Korngröße von 1 bis 10 µm.
Als Herstellungsverfahren für die Leuchtstoffschicht kommen sowohl Trockenbeschichtungsverfahren, z. B. elektrostatische Abscheidung oder elektrostatisch unterstütztes Bestäuben, als auch Nassbeschichtungsvertahren, z. B. Siebdruck, Dispenserverfahren, bei denen eine Suspension mit einer sich den Kanälen entlang bewegenden Düse eingebracht wird, oder Sedimentation aus der flüssigen Phase, in Betracht.

Für die Nassbeschichtungsverfahren müssen die Leuchtstoffe in Wasser, einem organischen Lösemittel, gegebenenfalls zusammen mit einem Dispergiermittel, einem Tensid und einem Antischaummittel oder einer Bindemittelzubereitung dispergiert werden. Geeignet für Bindemittelzubereitungen für Plasmabildschirme sind organische und anorganische Bindemittel, die eine Betriebstemperatur von 250°C ohne Zersetzung Versprödung oder Verfärbung überstehen.

Obwohl die Erfindung anhand eines AC-Farbplasmabildschirms beschrieben wurde, ist ihre Verwendung nicht auf diesen Typ des Plamabildschirms beschränkt, sondern kann beispielsweise auch für DC-Farbplasmabildschirme und für monochomatischen AC- und DC-Plasmabildschirme verwendet werden.

### Ausführungsbeispiel 1

Zur Herstellung von Ba_{0.5}K_{0.5}MgAl₁₀O_{16.75}:Eu werden 28.1 g Al₂O₃, 1,54 g MgO, 7,04 g BaCO₃, 1,00 g Eu₂O₃, 1,05 g MgF₂ und 1,93 g K₂CO₃ innig gemischt und in ein Korundschiffchen gefüllt. Dieses wird in einem Röhrenofen im einem reduzierenden Gasstrom aus 95% Stickstoff und 5% Wasserstoff innerhalb von einer Stunde auf 1250°C erhitzt. Diese Temperatur wird 2h gehalten. Danach setzt man dem reduzierenden Gasstrom Wasserdampf zu und erhitzt eine weitere Stunde auf 1250°C. Anschließend lässt man im reduzierenden Gasstrom auf Raumtemperatur abkühlen. Man erhält einen Leuchtstoff der Zusammensetzung Ba_{0.5}K_{0.5}MgAl₁₀O_{16.75}:Eu.

Mit dem so hergestellten Leuchtstoff wurde ein Plasmabildschirm nach den bekannten Verfahren hergestellt und getestet.

### Ausführungsbeispiel 2

Zur Herstellung von Ba_{0.9}K_{0.1}MgAl₁₀O_{16.95}:Eu werden 28.1 g Al₂O₃, 1,54 g MgO, 8,69 g BaCO₃, 1,00 g Eu₂O₃, 1,05 g MgF₂ und 0,39 g K₂CO₃ innig gemischt und in ein Korundschiffchen gefüllt. Dieses wird in einem Röhrenofen im einem reduzierenden Gasstrom aus 95% Stickstoff und 5% Wasserstoff innerhalb von einer stunde auf 1250°C erhitzt. Diese Temperatur wird 2h gehalten.

Danach setzt man dem reduzierenden Gasstrom Wasserdampf zu und erhitzt eine weitere Stunde auf 1250°C. Anschließend lässt man im reduzierenden Gasstrom auf Raumtemperatur abkühlen. Man erhält einen Leuchtstoff der Zusammensetzung Ba_{0.9}K_{0.1}MgAl₁₀O_{16.95}:Eu.

Mit dem so hergsstellten Leuchtstoff wurde ein Plasmabildschirm nach den bekannten Verfahren hergestellt und getestet.

## Patentansprüche

1. Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht, die einen Leuchtstoff, ausgewählt aus der Gruppe der dotierten Europium(II)aktivierten Bariummagnesiumaluminaten mit der allgemeinen Formel
Ba₁₋ₓMₓMgAl₁₀O_{17-0.5x} :Eu mit 0 < x = 0.5 und M = Li, Na, K, Rb und Cs;
BaMg_{1-y}M_{y}Al₁₀O_{17-0.5y}:Eu mit 0 < y = 0.5 und M = Li, Na, K, Rb und Cs;
und
BaMgAl_{10-z}N_{z}O_{17-0.5z}:Eu mit 0 < z = 5.0 und N = Mg, Ca, Sr, Ba und Zn
enthält.

2. Plasmabildschirm gemäß Anspruch 1,
**dadurch gekennzeichnet,**
**dass** der blauemittierende Leuchtstoff 1 bis 30 Mol% Europium(II) enthält.

3. Leuchtstoff, ausgewählt aus der Gruppe der dotierten Europium(II)aktivierten Bariummagnesiumaluminaten mit der allgemeinen Formel
Ba₁₋ₓMₓMgAl₁₀O_{17-0.5x} :Eu mit 0 < x = 0.5 und M = Li, Na, K, Rb und Cs;
BaMg_{1-y}M_{y}Al₁₀O_{17-0.5y}:Eu mit 0 < y = 0.5 und M = Li, Na, K, Rb und Cs;
und
BaMgAl_{10-z}N_{z}O_{17-0.5}:Eu mit 0 < z = 5.0 und N = Mg Ca, Sr, Ba und Zn.

## Claims

1. A plasma display with a carrier plate, a transparent front plate, a ribbed structure which subdivides the space between the carrier plate and the front plate into plasma cells, which cells are filled with a gas, with one or several electrode arrays for generating corona discharges in the plasma cells, and with a phosphor layer which comprises a phosphor chosen from the group of doped europium(II)-activated barium-magnesium aluminates with the general formula
Ba₁₋ₓMₓMgAl₁₀O_{17-0.5x} :Eu with 0 < x = 0.5 and M = Li, Na, K, Rb and Cs;
BaMg_{1-y}M_{y}Al₁₀O_{17-0.5y}:Eu with 0 < y = 0.5 and M = Li, Na, K, Rb and Cs;
and
BaMgAl_{10-z}N_{z}O_{17-0.5z}:Eu with 0 < z = 5.0 and N = Mg, Ca, Sr, Ba and Zn.

2. A plasma display as claimed in claim 1, **characterized in that** the blue-emitting phosphor comprises 1 to 30 mole% europium(II).

3. A phosphor chosen from the group of doped europium(II)-activated barium-magnesium aluminates with the general formula
Ba₁₋ₓMₓMgAl₁₀O_{17-0.5x} :Eu with 0 < x = 0.5 and M = Li, Na, K, Rb and Cs;
BaMg_{1-y}M_{y}Al₁₀O_{17-0.5y}:Eu with 0 < y = 0.5 and M = Li, Na, K, Rb and Cs;
and
BaMgAl_{10-z}N_{z}O_{17-0.5z}:Eu with 0 < z = 5.0 and N = Mg, Ca, Sr, Ba and Zn.

## Revendications

1. Ecran à plasma comportant une plaque de support, une plaque avant transparente, une structure à nervures qui divise l'espace entre la plaque de support et la plaque avant en cellules à plasma, lesquelles sont remplies d'un gaz, un ou plusieurs réseaux d'électrodes pour produire des décharges électriques discrètes dans les cellules à plasma et une couche de luminophore contenant un luminophore choisi dans le groupe des aluminates de baryum-magnésium activés dopés à l'europium (II) de formule générale
Ba₁₋ₓMₓMgAl₁₀O_{17-0,5x} : Eu avec 0 < x = 0,5 et M = Li, Na, K, Rb et Cs ;
BaMg_{1-y}M_{y}Al₁₀O_{17-0,5y} : Eu avec 0 < y = 0,5 et M = Li, Na, K, Rb et Cs ;
et
BaMgAl_{10-z}N_{z}O_{17-0,5z} : Eu avec 0 < z = 5,0 et N = Mg, Ca, Sr, Ba et Zn.

2. Ecran à plasma selon la revendication 1,
**caractérisé en ce que** le luminophore émettant dans le bleu contient 1 à 30 % en mol d'europium (II).

3. Luminophore choisi dans le groupe des aluminates de baryum-magnésium activés dopés à l'europium (II) de formule générale
Ba₁₋ₓMₓMgAl₁₀O_{17-0,5x} : Eu avec 0 < x = 0,5 et M = Li, Na, K, Rb et Cs ;
BaMg_{1-y}M_{y}Al₁₀O_{17-0,5y} : Eu avec 0 < y = 0,5 et M = Li, Na, K, Rb et Cs ;
et
BaMgAl_{10-z}N_{z}O_{17-0,5z} : Eu avec 0 < z = 5,0 et N = Mg, Ca, Sr, Ba et Zn.
